# EUROPÄISCHE PATENTSCHRIFT

(11) **EP 3 022 456 B1**
(45) Veröffentlichungstag und Bekanntmachung des Hinweises auf die Patenterteilung: **26.04.2017**
(21) Anmeldenummer: 13739986.1
(22) Anmeldetag: 19.07.2013
(51) Int. Cl.: F16D 23/10

(54) **SYNCHRONISIERKUPPLUNG**
SYNCHRONIZING CLUTCH
ACCOUPLEMENT DE SYNCHRONISATION

(43) Veröffentlichungstag der Anmeldung: 25.05.2016
(73) Patentinhaber: Renk-Maag GmbH, 8404 Winterthur (CH)
(72) Erfinder: WALDBURGER, Michael, CH-8309 Nürensdorf (CH)
(74) Vertreter: Troesch Scheidegger Werner AG
(86) Internationale Anmeldenummer: PCT/EP2013/065316
(87) Internationale Veröffentlichungsnummer: WO 2015/007341

(56) Entgegenhaltungen:
- US-A- 2 120 092
- US-A- 4 053 038

## Beschreibung

Die vorliegende Erfindung betrifft eine Synchronkupplung nach dem Oberbegriff von Anspruch 1.

Eine Synchronkupplung wird zwischen einer antreibenden Maschine und einer getriebenen Maschine eingesetzt. Dabei rückt die Synchronkupplung automatisch ein, wenn die antreibende Maschine die getriebene Maschine drehzahlmässig überholt, d.h. eine höhere Drehzahl aufweist. Entsprechend rückt die Kupplung auch wieder selbständig aus, wenn die Drehzahl der antreibenden Maschine im Verhältnis zur getriebenen Maschine sinkt. Damit ist eine derartige Synchronkupplung als Schaltkupplung aufgebaut, welche mit einem automatischen resp. selbsttätigen Synchronmechanismus ausgerüstet ist. Dieser Synchronmechanismus nimmt selbst an der Kraftübertragung nicht teil.

Solche Kupplungen werden beispielsweise in Schiffsantrieben eingesetzt, wo sie im Kraftfluss zwischen einer Gasturbine und einer beispielsweise mit einem Dieselaggregat verbundenen Getriebeeinheit der Schiffschraube eingesetzt sind.

Auch bei Kraftwerken werden derartige Kupplungen beispielsweise zwischen einem Generator und einer Turbine, beispielsweise einer Gas- oder Dampfturbine eingesetzt. Synchronkupplungen der beschriebenen Art sind beispielsweise aus der CH 499 735 oder der US 2 120 092 bekannt, bei welchem der Synchronmechanismus mit automatisch einrückenden mechanischen Klinkenelementen aufgebaut ist. Der Synchronisierungsmechanismus ist dabei als axial zwischen zwei Kupplungsnaben verschiebbar angeordneter Kupplungsstern mit einer darin axial festgehaltenen, ihrerseits aber ebenfalls drehbar gelagerten Synchronisiermuffe gebildet. Dabei steht der Kupplungsstern mit der ersten Kupplungsnabe stets im Eingriff, während die Synchronisierungsmuffe mit der zweiten Kupplungsnabe über eine Schräg- oder Steilverzahnung im Eingriff steht. Eine Verbindung zwischen Kupplungsstern und Synchronisierungsmuffe erfolgt mittels zwischen diesen beiden Elementen angeordneten Klinken, die in eine entsprechend ausgebildete Verzahnung der Synchronisierungsmuffe resp. Kupplungsstern eingreifen und damit eine in einer Drehrichtung wirkende formschlüssige Verbindung zwischen Synchronisierungsmuffe und Kupplungsstern bewirken. Der Kupplungsstern wird dann über zweites Schräg- resp. Steilverzahnung in die zweite Kupplungsnabe gegen einen Anschlag eingeschoben und damit die Kupplung aktiviert, wobei die Steigung dieses zweiten Schräg- resp. Steilverzahnungs grösser ist als das erste Schräg- oder Steilverzahnung der Synchronisierungsmuffe. Damit werden die Klinken entlastet und der Kraftfluss der eingekuppelten Kupplung erfolgt allein über den Kupplungsstern, welcher nun mit der ersten und zweiten Kupplungsnabe direkt im Eingriff steht. Sobald ein negatives Drehmoment auf die Kupplung einwirkt, verschiebt sich die Synchronisierungsmuffe über das zweite Schrägresp. Steilverzahnung zurück in die ausgekuppelte Stellung und rückt damit aus der Verzahnung mit der zweiten Kupplungsnabe aus.

Der Vorteil einer solchen Kupplung ist darin zu sehen, dass sie ohne zusätzliche Steuer- oder Bewegungshilfen ein robustes und zuverlässiges Ein- und Auskuppeln über einen grossen Betriebsbereich erzielt.

Ein Problem dieser Anordnung besteht allerdings darin, dass das negative Drehmoment genügend Kraft aufbringen muss, um die Synchronisierungsmuffe entlang der Schräg- resp. Steilverzahnung axial zu verschieben. Wenn die Differenzdrehzahlen zwischen Antriebs- und Abtriebswelle der Synchronkupplung nur sehr klein sind, kann diese Kraft zu klein sein, insbesondere bei kleinen Drehzahlen. Das kann dazu führen, dass die Kupplung selbständig nicht vollständig ausrückt, weil das hierfür notwendige negative Drehmoment oder Bremsmoment zu gering ist.

Es ist bekannt, diese axiale Bewegung hydraulisch zu unterstützen, indem die Synchronisierungsmuffe als Kolben ausgebildet ist, der über einen Druckanschluss beispielsweise mit Öl in die ausgekuppelte Position verschoben werden kann. Damit kann das Auskuppeln einstellbar geschaltet werden und ist nicht von der Drehzahl oder dem Bremsmoment abhängig. Allerdings bedingt dies einen komplexeren Aufbau und eine Versorgung mit Drucköl, welches bei tiefen Drehzahlen nicht von der Kupplung selbst erzeugt werden kann sondern von einem externen Druckversorgungsanschluss stammen muss.

Die Aufgabe der vorliegenden Erfindung bestand darin, eine Synchronisierkupplung der genannten Art zu finden, welches auch bei nur geringen Drehzahlen auch bei kleinen Bremsmomenten ein selbständiges, zuverlässiges Ausrücken der Kupplung gewährleistet.

Diese Aufgabe wird erfindungsgemäss durch eine Synchronkupplung mit den Merkmalen nach Anspruch 1 gelöst. Weitere erfindungsgemässe Ausführungsformen ergeben sich aus den Merkmalen der weitern Ansprüche 2 bis 4 . Bei einer Synchronkupplung mit einem axial entlang der Längsachse der Synchronkupplung zwischen einer ersten und einer zweiten Nabe längsverschiebbar angeordneten Synchronmechanismus mit einer Synchronisierungsmuffe, wobei die Synchronisierungsmuffe einen Klinkenradträger und ein darauf angeordnetes Klinkenrad aufweist, und wobei der Klinkenradträger über eine Schrägverzahnung längsverschiebbar mit der ersten Nabe verbunden ist, ist erfindungsgemäss zwischen Klinkenradträger und erster Nabe mindestens ein Druckfederelement parallel zur Längsachse der Synchronkupplung wirkend angeordnet. Das Druckfederelement unterstützt die axiale Längsverschiebung des Klinkenradträgers und damit des ganzen Synchronmechanismus von der eingerückten in die ausgerückte Position, auch wenn nur wenig Bremsdrehmoment über die zweite Nabe zur Verfügung steht. Die Federstärke ist derart gewählt, dass bei positivem Antriebsdrehmoment über die zweite Nabe in die Kupplung sowohl die Einrückbewegung des Synchronmechanismus wie auch der eingerückte Betrieb nicht beeinträchtigt wird, aber ein selbständiges Ausrücken bei fehlendem Antriebsdrehmoment erfolgt, auch wenn kein oder nur ein geringes Bremsmoment vorhanden ist. Durch den Einsatz des Druckfederelementes ist diese Wirkung unabhängig von der Drehzahl und kann auch bei sehr geringen Drehzahlen ein zuverlässiges Ausrücken gewährleisten. Weiter besteht nur ein geringer Platzbedarf für die Konstruktion, insbesondere in radialer Richtung, was bei den in der Regel sehr beschränkten Platzverhältnissen für derartige Kupplungen ein Vorteil ist.

In einer Ausführungsform der erfindungsgemässen Synchronkupplung sind mehrere Druckfederelemente entlang mindestens eines Radialkreises am Klinkenradträger, vorzugsweise regelmässig voneinander beabstandet, angeordnet. Vorzugsweise sind mindestens 8 Druckfederelemente angeordnet, bei sehr grossen Kupplungen können auch mindestens 20 Druckfederelemente angeordnet sein. Bei der Anordnung entlang eines einzigen Radialkreises um die Längsachse der Synchronkupplung wird der Platzbedarf für die Druckfederelemente in radialer Ausdehnung minimiert. Falls bei grossen Synchronkupplungen mehr Raum zur Verfügung steht, können die Druckfederelemente auch auf zwei oder mehreren, koaxial zueinander liegenden Radialkreisen angeordnet sein und beispielsweise entlang des Umfanges regelmässig versetzt zueinander angeordnet sein, d.h. mit jeweils alternierenden radialen Abständen zur Längsachse der Synchronkupplung. Bei der erfindungsgemässen Synchronkupplung ist das Druckfederelement mit mindestens zwei gegenläufig zueinander laufenden Federwendeln gebildet. Diese Anordnung erlaubt eine platzsparende und sehr genaue Auslegung der Federwirkung. Weiter bleibt mindestens ein Teil der Federwirkung auch bei Ausfall einer einzelnen Federwendel erhalten. Bei der erfindungsgemässen Synchronkupplung sind die Federwendeln zwischen zwei Muffen angeordnet, wovon mindestens eine davon verschiebbar entlang einer koaxial zu den Federwendeln angeordneten Führungsstange angeordnet ist. Über die Muffen können die jeweiligen Enden der Federwendeln optimal aufgenommen werden und eine optimale Krafteinleitung und -übertragung gewährleistet werden. Die Führungsstange verhindert, dass sich eine Federwendel quer zur Druckrichtung ausbeult und damit die Federwirkung reduziert wird oder ganz ausfällt. Auch wird die Herstellung, Lagerung und Montage der Druckfederelemente dadurch vereinfacht.

In einer weiteren Ausführungsform der erfindungsgemässen Synchronkupplung sind die Enden der Führungsstange je in einem Flansch der ersten Nabe gehalten und es ist die Führungsstange durch ein Langloch in einem Flansch des Klinkenradträgers geführt, welcher zwischen den Flanschen der ersten Nabe angeordnet ausgebildet ist. Damit wird bei geringstem Platzbedarf ein zuverlässiger Kraftschluss zwischen der ersten Nabe und dem Klinkenradträger und damit dem Synchronmechanismus gebildet. Durch das Langloch, dass entsprechend der relativen Drehbewegung zwischen Klinkenradträger und ersten Nabe, welche von der Verbindung über eine Schrägverzahnung zwischen diesen beiden Elementen herrührt, als Bogen ausgebildet ist, wird die Längsverschiebung des Klinkenradträgers nicht behindert und das Druckfederelement kann platzsparend sehr dicht bei der Nabe resp. dem Klinkenradträger angeordnet werden, womit radial kein zusätzlicher Raum für die Anordnung des Druckfederelementes beansprucht wird.

In einer weiteren Ausführungsform der erfindungsgemässen Synchronkupplung ist das Druckfederelement aus Druckfedern mit flacher Federkonstante gebildet. Das bedeutet, dass eine Federkonstante mit flachem Verlauf der Kraftkurve in Bezug auf den Federweg eingestellt resp. ausgewählt wird. Es wird ein möglichst linearer, flacher Verlauf angestrebt, so dass die Federkraft in gespanntem Zustand nur wenig höher ist als im vorgespannten Zustand und damit das Rückstellverhalten des Kupplung gut eingestellt werden kann.

Ausführungsbeispiele der vorliegenden Erfindung werden nachstehend anhand von Figuren noch näher erläutert. Es zeigen
Fig. 1 schematisch die Ansicht einer erfindungsgemässen Synchronkupplung in einem Teilschnitt durch den Bereich des Synchronmechanismus;
Fig. 2 den Längsschnitt durch eine erfindungsgemässe Synchronkupplung im Bereich des Synchronmechanismus in eingerückter Stellung; und
Fig. 3 den Längsschnitt gemäss Figur 2 in ausgerückter Stellung.

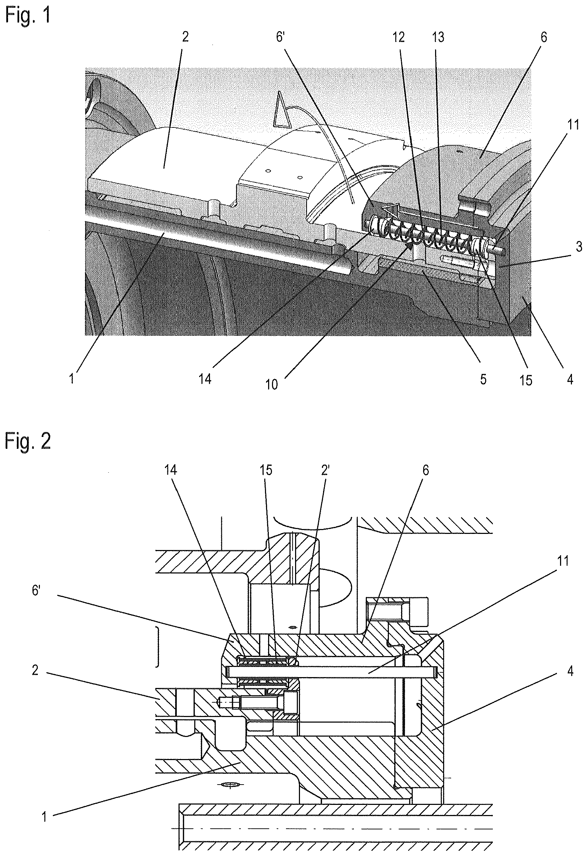

In Figur 1 ist sie schematische Ansicht eines Schnittes durch eine erfindungsgemässe Synchronkupplung im Bereich des Synchronmechanismus dargestellt. Der Einfachheit halber ist nur der Ausschnitt mit dem erfindungsgemässen Druckfederelement dargestellt, die übrigen Elemente der Synchronkupplung sind in für den Fachmann bekannten Weise einer Klinkenkupplung ausgeführt und brauchen nicht näher erläutert zu werden. Ein entlang der Längsachse der Synchronkupplung auf einer ersten Nabe 1 verschiebbar angeordnetes Klinkenrad 2 ist in seiner ausgekuppelten Stellung dargestellt. Dabei liegt das Klinkenrad 2 in der Figur 1 gegen die Schulter 3 eines Abschlussflansches 4 der Nabe 1 im Anschlag.

Das Klinkenrad 2 ist über eine Schrägverzahnung 5 mit der Nabe 1 formschlüssig verbunden. Beim Verschieben des Klinkenrades 2 in Richtung der eingerückten Position (in Figur 1 nach links) wird dadurch das Klinkenrad 2 gegenüber der Nabe 1 radial entsprechend der Steigung der Schrägverzahnung leicht verdreht.

Am Abschlussflansch 4 ist ein Haltering 6 in Richtung des Klinkenrades 2 angeordnet. Zwischen der Innenseite der Anschlagwand des Abschlussflansches 4 und dem nach innen gerichteten Rand 6' des Halteringes 6 ist ein Druckfederelement 10 angeordnet.

Das Druckfederelement 10 ist gebildet durch eine Führungsstange 11, deren Enden jeweils im Rand 6' des Halteringes 6 und dem Abschlussflansch 4 gelagert sind, sowie zwei Federwendeln 12, 13, deren Enden in Muffen 14, 15 abgestützt sind. Die Federwendeln 12, 13 sind bevorzugt gegenläufig ineinander gelegt angeordnet. Die rechte Muffe 15 ist entlang der Führungsstange 11 verschiebbar ausgebildet und stützt sich gegen einen Flansch 2' des Klinkenrades 2 ab. Damit wird über das Druckfederelement 10 eine Federkraft auf das Klinkenrad 2 ausgeübt, welches das Klinkenrad 2 in die in Figur 1 dargestellt Position verschiebt, sofern keine anderen Kräfte auf das Klinkenrad 2 einwirken.

Wenn nun ein positives Drehmoment in Pfeilrichtung M auf das Klinkenrad 2 über die Klinken (in der Figur nicht dargestellt) einwirkt, wird das Klinkenrad 2 wegen der entsprechend ausgeführten Schrägverzahnung 5 nach links in für den Fachmann bekannter Weise in die eingerückte Position verschoben und damit das Druckfederelement 10 zusammengedrückt. Die dafür aufzuwendende zusätzliche Kraft ist sehr gering und kann durch die herkömmliche Funktionsweise der Klinkenkupplung problemlos aufgebracht werden. Im eingerückten Betrieb, wenn der Kraftschluss zwischen der ersten und der zweiten Nabe (in Figur 1 nicht dargestellt) hergestellt ist und die Klinken nicht mehr kraftschlüssig eingreifen, genügt das dann aufgebrachte positive Drehmoment auf die Kupplung, um diese Position auch gegen die Kraftwirkung des Druckfederelementes 10 zu halten. Erst wenn dieses positive Drehmoment wegfällt, unterstützt das Druckfederelement 10, wie oben dargestellt, das Ausrücken der Kupplung, d.h. das Verschieben des Klinkenrades und damit des ganzen Synchronmechanismus in die ausgerückte Stellung.

In Figur 2 ist noch der Längsschnitt durch eine solche erfindungsgemässe Synchronkupplung im Bereich des Synchronmechanismus in eingerückter Stellung detaillierter dargestellt. Hier ist deutlich die Lagerung der Enden der Führungsstange 11 im Rand 6' des Halteringes 6 und Abschlussflansch 4 zu sehen. Sowohl der Abschlussflansch 4 wie auch der Haltering 6 sind vorteilhaft abnehmbar mit der ersten Nabe 1 verbunden, womit diese Teile einfach montiert und demontiert werden können und insbesondere ein guter Zugang zu den Druckfederelementen 10 gewährleistet bleibt.

Auch ist gut erkennbar, wie sich die rechte Muffe 15 gegen den Flansch 2' des Klinkenrades 2 abstützt. Die Muffen 14 und 15 sind hier als Hohlmuffen mit einseitig angeordnetem Kragen ausgebildet, gegen welchen sich die Enden der Federwendeln (in der Figur 2 der Übersichtlichkeit halber nicht dargestellt) abstützen. Selbstverständlich sind auch andere Ausbildungen der Aufnahme und Abstützung denkbar.

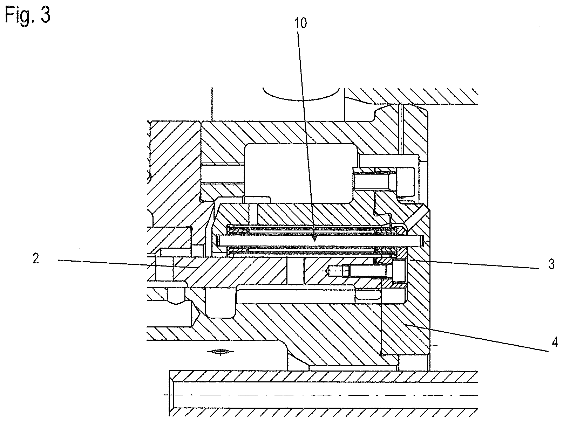

In Figur 3 ist der Längsschnitt gemäss Figur 2 in ausgerückter Stellung des Synchronmechanismus dargestellt, d.h. das Klinkenrad 2 befindet sich in ausgerückter Stellung im Anschlag gegen den Anschlag des Abschlussflansches 4. Dabei ist das Druckfederelement 10 in seine ausgedehnte Stellung ausgerückt. Sehr gut sichtbar ist der geringe radiale Platzbedarf durch die Anordnung der Druckfederelemente 10 unmittelbar im Bereich der Aussenseite des Klinkenrades 2.

## Patentansprüche

1. Synchronkupplung mit einem axial entlang der Längsachse der Synchronkupplung zwischen einer ersten (1) und einer zweiten Nabe längsverschiebbar angeordneten Synchronmechanismus mit einer Synchronisierungsmuffe, wobei die Synchronisierungsmuffe einen Klinkenradträger (2) und ein darauf angeordnetes Klinkenrad aufweist, und wobei der Klinkenradträger (2) über eine Schrägverzahnung (5) längsverschiebbar mit der ersten Nabe (1) verbunden ist, wobei zwischen Klinkenradträger (2) und erster Nabe (1) mindestens ein Druckfederelement (10) parallel zur Längsachse der Synchronkupplung wirkend angeordnet ist, **dadurch gekennzeichnet, dass** das Druckfederelement (10) mit mindestens zwei gegenläufig zueinander laufenden Federwendeln (12,13) gebildet ist, welche zwischen zwei Muffen (14,15) angeordnet sind, wovon mindestens eine davon verschiebbar entlang einer koaxial zu den Federwendeln (12,13) angeordneten Führungsstange (11) angeordnet ist.

2. Synchronkupplung nach Anspruch 1, **dadurch gekennzeichnet, dass** mehrere Druckfederelemente (10) entlang mindestens eines Radialkreises am Klinkenradträger (2), vorzugsweise regelmässig voneinander beabstandet, angeordnet sind, vorzugsweise mindestens 8, vorzugsweise mindestens 20.

3. Synchronkupplung nach Anspruch 1 oder 2, **dadurch gekennzeichnet, dass** die Enden der Führungsstange (11) je in einem Flansch der ersten Nabe (1) gehalten sind und die Führungsstange (11) durch ein Langloch (2") in einem Flansch (2') des Klinkenradträgers (2) geführt ist, welcher zwischen den Flanschen (2',4) der ersten Nabe (1) angeordnet ausgebildet ist.

4. Synchronkupplung nach einem der Ansprüche 1 bis 3, **dadurch gekennzeichnet, dass** das Druckfederelement (10) aus Druckfedern mit flacher Federkonstante gebildet ist.

## Claims

1. A synchronising clutch comprising a synchronising mechanism which is arranged movably in a longitudinal direction and axially along a longitudinal axis of the synchronising clutch between a first hub (1) and a second hub, said synchronising mechanism comprising a synchronising sleeve, wherein said synchronising sleeve comprises a ratchet wheel support (2) and a ratchet wheel arranged thereon, and wherein said ratchet wheel support (2) is movably connected to said first hub (1) in the longitudinal direction via a helical gearing (5), wherein at least one compression spring element (10) is arranged between said ratchet wheel support (2) and said first hub (1), said compression spring element acting in parallel to the longitudinal axis of said synchronising clutch, **characterised in that** said compression spring element (10) is configured of at least two spring coils (12,13), which run contrary to each other, which are arranged between two sleeves (14,15), wherein at least one thereof is arranged movably along a guiding rod (11), which is arranged coaxially to said spring coils (12,13).

2. The synchronising clutch according to claim 1, **characterized in that** a plurality of compression spring elements (10) are arranged along at least one radial circle at said ratchet wheel support (2), in particular spaced part from each other regularly, wherein the number thereof is at least 8, in particular at least 20.

3. The synchronising clutch according to claim 1 or 2, **characterized in that** the ends of the guiding rod (11) are supported in a flange of the first hub (1), respectively, and wherein the guiding rod (11) is guided through a slot (2") in a flange (2') of the ratchet wheel support (2), which is formed arranged between the flanges (2',4) of the first hub (1).

4. The synchronising clutch according to one of claims 1 to 3, **characterized in that** the compression spring element (10) is formed of compression springs having a flat spring rate.

## Revendications

1. Accouplement synchrone pourvu d'un mécanisme synchrone agencé mobile longitudinalement entre un premier (1) et un deuxième moyeu axialement le long de l'axe longitudinal de l'accouplement synchrone avec un manchon de synchronisation, dans lequel le manchon de synchronisation présente un support de roue à rochet (2) et une roue à rochet agencée sur ce dernier, et dans lequel le support de roue à rochet (2) est raccordé au premier moyeu (1) mobile longitudinalement par le biais d'une denture hélicoïdale (5), dans lequel il est agencé entre le support de roue à rochet (2) et le premier moyeu (1) au moins un élément de ressort de pression (10) agissant parallèlement à l'axe longitudinal de l'accouplement synchrone, **caractérisé en ce que** l'élément de ressort de pression (10) est formé avec au moins deux spirales de ressort (12, 13) agissant en sens opposé l'une par rapport à l'autre et qui sont agencées entre deux manchons (14, 15), dont au moins un est agencé de façon à pouvoir se déplacer le long d'une tige de guidage (11) agencée de façon coaxiale par rapport aux spirales (12, 13).

2. Accouplement synchrone selon la revendication 1, **caractérisé en ce qu'**il est agencé sur le support de roue à rochet (2) plusieurs éléments de ressort de pression (10) le long d'au moins un cercle radial, de préférence espacés de façon régulière les uns des autres, de préférence au moins 8, de préférence au moins 20.

3. Accouplement synchrone selon la revendication 1 ou 2, **caractérisé en ce que** les extrémités de la tige de guidage (11) sont maintenues respectivement dans une bride du premier moyeu (1), et **en ce que** la tige de guidage (11) est guidée à travers un trou oblong (2") dans une bride (2') du support de roue à rochet (2), laquelle est réalisée agencée entre les brides (2', 4) du premier moyeu (1).

4. Accouplement synchrone selon l'une des revendications 1 à 3, **caractérisé en ce que** l'élément de ressort de pression (10) est formé à partir de ressorts de pression avec une constante de ressort plate.
